Europäisches Patentamt

**European Patent Office**

Office européen des brevets

(19)

(11) Veröffentlichungsnummer: **0 027 869**
**B1**

(12)

# EUROPÄISCHE PATENTSCHRIFT

(45) Veröffentlichungstag der Patentschrift:
**12.12.84**

(51) Int. Cl.³: **B 60 G 17/00,** B 64 C 25/60,
B 61 F 5/24

(21) Anmeldenummer: **80105044.4**

(22) Anmeldetag: **26.08.80**

(54) Einrichtung zur Stoss- und Schwingungsdämpfung für Fahrzeuge.

(30) Priorität: **27.10.79 DE 2943486**

(43) Veröffentlichungstag der Anmeldung:
**06.05.81 Patentblatt 81/18**

(45) Bekanntmachung des Hinweises auf die Patenterteilung:
**12.12.84 Patentblatt 84/50**

(84) Benannte Vertragsstaaten:
**AT CH FR GB IT LI**

(56) Entgegenhaltungen:
**EP - A - 0 032 158**
**DE - A - 1 964 464**
**DE - A - 2 124 029**
**DE - A - 2 145 358**
**DE - A - 2 150 406**
**DE - A - 2 441 172**
**DE - A - 2 837 708**
**DE - B - 1 163 951**
**US - A - 2 865 627**
**US - A - 2 992 837**
**US - A - 3 029 089**
**US - A - 3 124 368**
**US - A - 3 970 009**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Beusse, Hans, Borsteler Chaussee 284 b,**
**D-2000 Hamburg (DE)**

## Beschreibung

Die Erfindung betrifft eine Einrichtung nach dem Oberbegriff des Anspruchs 1. Derartige Einrichtungen weisen in ihrer einfachsten Form immer eine Feder auf, die mit einem Dämpfungselement zusammenwirkt. In Fällen, in denen einfache Lösungen nicht ausreichen, werden aufwendigere Lösungen verwendet, die den jeweiligen Anforderungen besser angepaßt sind. Aus der US-A-3 124 368 ist beispielsweise eine Einrichtung zur Stoß- und Schwingungsdämpfung für Fahrzeuge bekannt, die zwischen den Rädern, den Schwimmern oder dgl. und der Masse des Fahrzeuges angeordnet ist, wobei die Einrichtung im wesentlichen aus einer Stellstrebe (10) bekannter Art besteht, die auf eine nach Größe und Richtung variable Eingangsgröße f (t) mit einer dieser Größe proportionalen Relativgeschwindigkeit der Anschlußpunkte zueinander reagiert, wobei die Eingangsgröße f (t) von mindestens einem an die Fahrzeugmasse angekoppelten Beschleunigungsmesser (18) über ein frequenzabhängiges aktives Netzwerk (70, 72, 74) derart geliefert wird, daß der Stellstrebe (10) ein weitgehend wählbares frequenzabhängiges Feder-Dämpfungsverhalten aufgezwungen wird, wobei ein dem Weg des beweglichen Teils der Stellstrebe (10) entsprechendes elektrisches Signal in das Netzwerk (70, 72, 74) derart über einen Weggeber (12) und einen Integrator (72) eingegeben wird, daß eine Rückführung des beweglichen Teils in die Mittellage über eine relativ große Zeitkonstante erfolgt. Dabei werden die angegebenen Mittel dazu benutzt, die Wirkung einer im wesentlichen aus einer Hauptfeder $K_2$ bestehenden Einrichtung zu verbessern, was jedoch nur bei Erregerfrequenzen oberhalb der Resonanzfrequenz der Einrichtung gelingt. Unterhalb der Resonanzfrequenz wird das Verhalten der Einrichtung durch die Feder $K_2$ bestimmt, die sich bei derart niedrigen Erregerfrequenzen annähernd wie eine starre Strebe verhält.

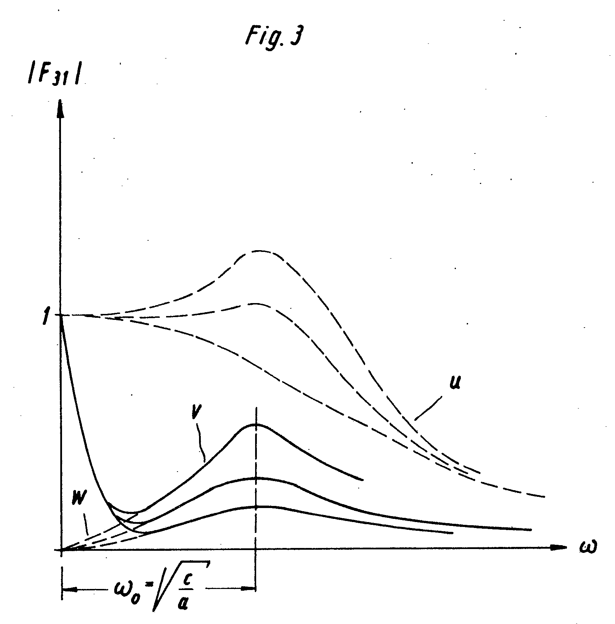

Eine ähnliche Einrichtung, wobei eine Rückführung des beweglichen Teils einer Stellstrebe, die nicht zwischen den Rädern oder dgl. und der Masse eines Fahrzeuges sondern zum Isolieren eines Flugzeugführers im Flugzeugführersitz eines Flugzeugs von Stößen und Schwingungen ist, ist aus der DE-A-2 145 358 bekannt. Hierbei werden aktive Mittel zur Erzeugung einer Bewegung dazu benutzt, das Verhalten üblicher passiver Feder-Dämpfungseinrichtungen zu simulieren, wobei jedoch vorgesehen ist, daß die Resonanzfrequenz der Einrichtung durch Verändern der elektronischen Schaltung zu niedrigeren Frequenzen verschiebbar ist. Obwohl diese Einrichtung aufgrund der vorgenannten Maßnahme auch noch bei relativ niedrigen Frequenzen wirksam ist, weist sie doch bei Frequenzen unterhalb der Resonanzfrequenz das gleiche Verhalten auf, wie die erstgenannte Einrichtung bekannter Art, d. h. sie zeigt das Verhalten eines starren Körpers. Dieses Verhalten wird durch Fig. 3 der genannten Schrift belegt, woraus zu entnehmen ist, daß sich alle dargestellten Frequenzgang-Kurven unterhalb der Resonanzfrequenz dem Wert 1 nähern.

Demgemäß liegt der Erfindung die Aufgabe zugrunde, eine Einrichtung der eingangs genannten Art derart auszubilden, daß diese auch unterhalb der Resonanzfrequenz wirksam ist.

Diese Aufgabe wird bei einer gattungsgemäßen Einrichtung durch die kennzeichnenden Merkmale des Anspruchs 1 gelöst. In den Unteransprüchen sind Einzelheiten der Erfindung angegeben. Das vorteilhafte Verhalten der Einrichtung zeigt sich deutlich beim Überrollen eines Bodenprofiles durch ein mit niedriger Geschwindigkeit fahrendes Fahrzeug. Dabei folgt das Fahrwerk den Erhebungen des Bodens, wohingegen die Fahrzeugmasse selbst bei stehendem Fahrzeug auf dem ursprünglichen Niveau verbleibt. Somit werden alle Bodenunebenheiten ausgeglichen, sofern sie nur innerhalb des Arbeitsbereiches der Einrichtung, insbesondere innerhalb des Hubes der Stellstrebe, liegen. Diese Einrichtung ist praktisch verwendbar bis zur Frequenz Null, sofern das Operationsgebiet des Fahrzeuges die vorgenannten Bedingungen erfüllt. Für den allgemeinen Fall, daß das Fahrzeug außer den Unebenheiten des Bodens größere Höhenunterschiede zu überwinden hat, ist eine mit einer relativ großen Zeitkonstante wirkende Rückführung der Stellstrebe in die Mittellage vorgesehen. Die vorgenannte Einrichtung bietet eine Vielzahl von Anwendungsmöglichkeiten. So kann durch die Erfindung der Landestoß bei Flugzeugen erheblich gemildert werden, wodurch sich bezüglich des Gewichts der Flugzeugzelle eine günstigere Dimensionierung ergeben kann. Alternativ kann auch die Lebensdauer von Flugzeugen gesteigert werden.

Eine andere Anwendung der Erfindung ergibt sich im Bereich der Schienenfahrzeuge. Hier ist es möglich, Vertikal- und Querbeschleunigungen des Fahrzeuges, verursacht durch Ungenauigkeiten in der Schienenführung, auszugleichen und eine koordinierte Kurvenfahrt auch bei unterschiedlichen Geschwindigkeiten zu verwirklichen. Hierdurch wird die Möglichkeit eröffnet, das bestehende Schienennetz für zukünftige Hochgeschwindigkeitsbahnen zu verwenden. In diesem Falle würden die entsprechenden Stellstreben eventuell als lineare Elektromotoren ausgeführt sein.

Die Erfindung ist anhand eines Beispiels beschrieben und durch Zeichnungen erläutert. Es zeigen:

Fig. 1 eine Grundausführung einer erfindungsgemäßen Einrichtung;

Fig. 2 eine Einrichtung nach Fig. 1 mit einer Nachstellung in die Mittellage;

Fig. 3 eine Darstellung verschiedener Frequenzgänge;

Fig. 4 eine Einrichtung nach Fig. 2 mit einem K-Funktionsgeber und

Fig. 5 eine Einrichtung nach Fig. 4 mit einer Schaltung zur Realisierung einer wählbaren Grundstellung.

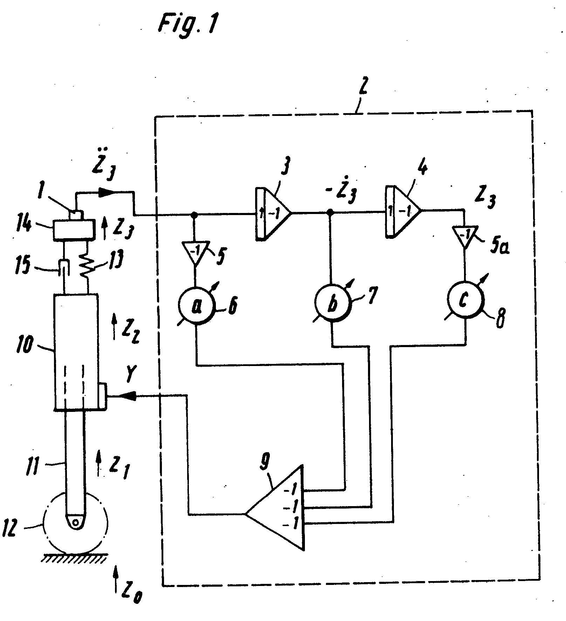

Figur 1 zeigt eine erfindungsgemäße Einrichtung zur Stoß- und Schwingungsdämpfung, hauptsächlich bestehend aus einer Stellstrebe 10 mit einem beweglichen Teil 11, einem Laufrad 12, einer

**0 027 869**

Ankopplungsfeder 13, einer Ankopplungsdämpfung 15, einer Masse 14, einem Beschleunigungsmesser 1 und einem aktiven Netzwerk 2.

Hierbei können die Feder 13 und die Dämpfung 15 nach der für Fahrwerke üblicher Art ausgeführt sein.

Das Netzwerk 2 besteht aus zwei Integratoren 3 und 4, zwei Umkehrverstärkern 5 und 5a, drei Koeffizienten-Potentiometern 6, 7 und 8 sowie einem Summierverstärker 9. In dieser Prinzipdarstellung ist das Laufrad 12 Bestandteil eines beliebigen Fahrwerks eines Fahrzeuges mit einer bestimmten Fahrzeugmasse, wobei die Masse 14 den Teil der Fahrzeugmasse darstellt, der durch das Laufrad 12 über die Stellstrebe 10 abgestützt wird. Eine zu durchfahrende horizontale Strecke weist im allgemeinen örtlich verschiedene Erhebungen $Z_0$ auf. Hierdurch wird dem beweglichen Teil 11 über das Laufrad 12 eine Bewegung mit den Weg $Z_1$ erteilt. Diese Bewegung längs $Z_1$ verursacht eine Bewegung der Stellstrebe 10 mit dem Weg $Z_2$, so daß der Masse 14 schließlich über die beiden Koppelglieder 13 und 15 eine Bewegung mit dem Weg $Z_3$ erteilt wird. Aufgrund der Bewegung der Masse 14 liefert der Beschleunigungsmesser 1 eine der Beschleunigung $\ddot{Z}_3$ proportionale elektrische Spannung, die dem Umkehrverstärker 5 zugeführt wird. Das Ausgangssignal des Umkehrverstärkers 5 ist somit proportional $-\ddot{Z}_3$ und gelangt über das Koeffizienten-Potentiometer 6 zu einem Eingang des Summierverstärkers 9. Das vom Beschleunigungsmesser 1 gelieferte Signal wird weiterhin dem Integrator 3 zugeführt. Dieser liefert an seinem Ausgang ein der Geschwindigkeit $-\dot{Z}_3$ proportionales Signal, das über das Koeffizienten-Potentiometer 7 auf einen zweiten Eingang des Mischverstärkers 9 geschaltet ist. Das vom Integrator 3 gelieferte Signal $-\dot{Z}_3$ wird weiterhin dem Integrator 4 zugeführt, der an seinem Ausgang ein Weg $Z_3$ proportionales Signal liefert, das über den Umkehrverstärker 5a und über das Koeffizienten-Potentiometer 8 auf einen dritten Eingang des Summierverstärkers 9 geschaltet ist. Der Summierverstärker 9 bildet aus den drei negativen Eingangsgrößen eine positive Stellgröße y, die über eine Einrichtung bekannter Art zur Signalwandlung eine nach Größe und Dichtung unterschiedliche Geschwindigkeit des beweglichen Teils 11 der Stellstrebe 10 bewirkt. Die Geschwindigkeit des Teils 11 der Stellstrebe ist nun gerade so groß und so gerichtet, daß die Auslenkung der Masse 14 durch die Stellstrebe weitgehend ausgeglichen wird.

Bei der hier und im folgenden erwähnten Stellstrebe handelt es sich also um ein Gerät zur Abgabe einer mechanischen Leistung bei geradliniger Bewegung, also um einen Linearmotor, der z. B. als Hydraulik- oder Elektromotor ausgeführt sein kann.

Zwischen der Stellgröße y und der Bewegung $\Delta \dot{Z}$ des beweglichen Teils 11 der Strebe 10 besteht folgende Beziehung:

$$y = T \cdot \Delta \dot{Z} = T(\dot{Z}_1 - \dot{Z}_2), \tag{1}$$

Dabei bedeuten die Symbole:

$\dot{Z}_1$ = Geschwindigkeit des Teils 11
$\dot{Z}_2$ = Geschwindigkeit der Strebe 10
$T$ = Zeitkonstante der Strebe (Mittelwert)

Es gelten folgende Begrenzungen:

$$\Delta \dot{Z} \leqq \dot{Z}_{max} \tag{2}$$
$$\Delta Z \leqq Z_{max} \tag{3}$$

Hierbei sind interne Massenwirkungen der Stellstrebe vernachlässigt. Bei Annahme einer starren Ankopplung 13, 15 an die Masse 14 gilt:

$$Z_2 = Z_3 \tag{3a}$$

Damit ergibt sich folgende Beziehung zwischen der Stellgröße y und den vom Netzwerk 2 gelieferten Größen:

$$y \simeq a\ddot{Z}_3 + b\dot{Z}_3 + cZ_3 \tag{4}$$

Das durch die Differentialgleichungen (1) und (4) definierte System kann durch einen Frequenzgang beschrieben werden. Hier gilt folgende Substitution:

$$Z_1 = \hat{Z}_1 \cdot e^{pt} \tag{5}$$

Dabei bedeuten die Symbole:

$\hat{Z}_1$ = Scheitelwert von $Z_1$
$e$ = Basis des log. nat.

3

$p$ = imaginärer Operator $j\,\omega\,[s^{-1}]$
$\omega$ = Kreisfrequenz

Das Wegverhältnis $Z_3/Z_1$ bzw. der Frequenzgang dafür bei harmonischer Einleitung von $Z_1$ und für stationäre Verhältnisse wird dann:

$$\frac{Z_3}{Z_1} = F_{31} = \frac{1}{\frac{a}{T}\cdot p + \left(1 + \frac{b}{T}\right) + \frac{c}{T}\cdot\frac{1}{p}} \tag{6}$$

bzw. das Verhältnis der absoluten Beträge

$$F_{31} = \frac{1}{\sqrt{\left(a + \frac{b}{T}\right)^2 + \frac{1}{T}2\left(a\,\omega - \frac{c}{\omega}\right)^2}}\cdot \tag{7}$$

Für $\omega = 0$ und $\omega = \infty$ wird $|F_{31}| = 0$.
Die dämpfungslose Kreisfrequenz beträgt:

$$\omega = \omega_0 = \sqrt{\frac{c}{a}}\,; \tag{8}$$

mit einem Maximalwert bei schwacher Dämpfung:

$$|F_{31}|_{max} \simeq \frac{1}{1 + \frac{b}{T}}\cdot \tag{9}$$

Die Eigenschaften der Einrichtung werden weitgehend durch das aktive Netzwerk bestimmt, wobei der Masseneinfluß praktisch verschwindet. Besonders günstig sind die geringen Auslenkungen im Bereich niedriger Frequenzen. Bei der erfindungsgemäßen Einrichtung sind im allgemeinen noch Maßnahmen erforderlich, um deren technische Brauchbarkeit auch dann sicherzustellen, wenn die zu durchfahrende Strecke einen Anstieg aufweist.

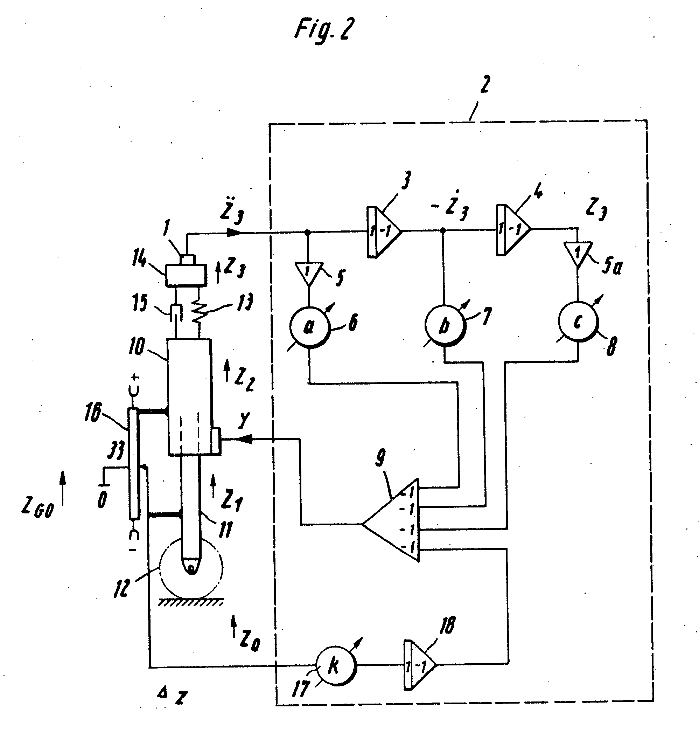

Fig. 2 zeigt demgemäß eine erfindungsgemäße Einrichtung mit einer nachschleppenden Niveau-Anspannung. Diese Einrichtung besteht im wesentlichen aus den aus Fig. 1 bekannten und entsprechend bezeichneten Elementen und weist weiterhin einen Weggeber 16 mit einem festen Abgriff 33 und einem Schleifer, ein Koeffizienten-Potentiometer 17 und einen Integrator 18 auf, die entsprechend Fig. 2 angeordnet sind. Dabei ist das Potentiometer 17 auf einen relativ kleinen Koeffizienten k eingestellt. Wird nun eine Bodenwelle überrollt, so wird die Vertikalbewegung der Masse 14 auf die vorbeschriebene Weise auf ein Minimum reduziert. Hierbei liefert der Weggeber 16 ein Signal, das der Auslenkung $\Delta_z$ des Teils 11 aus der Mittellage entspricht. Die Mittellage ist durch das Potential 0 definiert. Das Signal $\Delta_z$ gelangt über das Koeffizientenpotentiometer 17 multipliziert mit dem Faktor k zum Eingang des Integrators 18. Das integrierte Signal gelangt als zusätzliches Signal in den Summierverstärker 9. Infolge des kleinen Koeffizienten k ergibt sich eine relativ große Zeitkonstante $\frac{T}{k}$, was zur Folge hat, daß sich die $\Delta_z$-Aufschaltung beim Überrollen einer kurzen Bodenwelle nicht auswirkt. Anders verhält es sich es sich jedoch, wenn die Fahrstrecke einen Anstieg bzw. ein Gefälle aufweist. In diesem Falle stellt der Weggeber über eine relativ lange Zeit eine Auslenkung $\Delta_z$ fest, und das entsprechende integrierte Signal sorgt über den Summierverstärker 9 für die Rückführung des Teils 11 in die Mittelstellung. Damit ist die Einrichtung vom Anstieg der Fahrstrecke unabhängig. Durch die zusätzliche Aufschaltung von $\Delta_z = Z_1 - Z_3$ ergibt sich folgende Differentialgleichung:

$$y = a\cdot\ddot{Z}_3 + b\dot{Z}_3 + cZ_3 + k\,(Z_3 - Z_1)\,dt \tag{10}$$

Bei Annahme einer starren Kopplung zwischen dem Teil 10 und der Masse 14 gilt

$$Z_{Go} = Z_3. \tag{11}$$

Dabei bedeutet $Z_{Go}$ die Ablage des Schleifkontaktes von der Mittellage des Weggebers 16. Für den Frequenzgang $F_{31}$ gilt folgende Beziehung:

4

$$F_{31} = \frac{1 + \boxed{\dfrac{k}{T} \cdot \dfrac{1}{p^2}}}{\dfrac{a}{T} \cdot p + \left(1 + \dfrac{b}{T}\right) + \dfrac{c}{T} \cdot \dfrac{1}{p} + \boxed{\dfrac{k}{T} \cdot \dfrac{1}{p^2}}} \qquad (12)$$

Hierbei stellt der gestrichelt eingerahmte Ausdruck den Einfluß der Niveau-Anpassung dar.

Figur 3 zeigt eine Gegenüberstellung mehrerer Frequenzgang-Kurven. Die Kurven u entsprechen den Frequenzgängen bisheriger, d. h. passiver Feder-Dämpfungs-Einrichtungen.

Demgegenüber sind durch die Erfindung Frequenzgänge entsprechend den Kurven v realisierbar. Diese Funktionen ergeben sich aus Gleichung (12) und zeichnen sich durch ein besonders niedriges $F_{31}$ im gesamten Frequenzbereich aus. Durch Nullstellung des Potentiometers 17 ergibt sich $k = 0$. In diesem Falle beginnen die entsprechenden Kurven bei $F_{31} = 0$, wie dies die Kurven w zeigen.

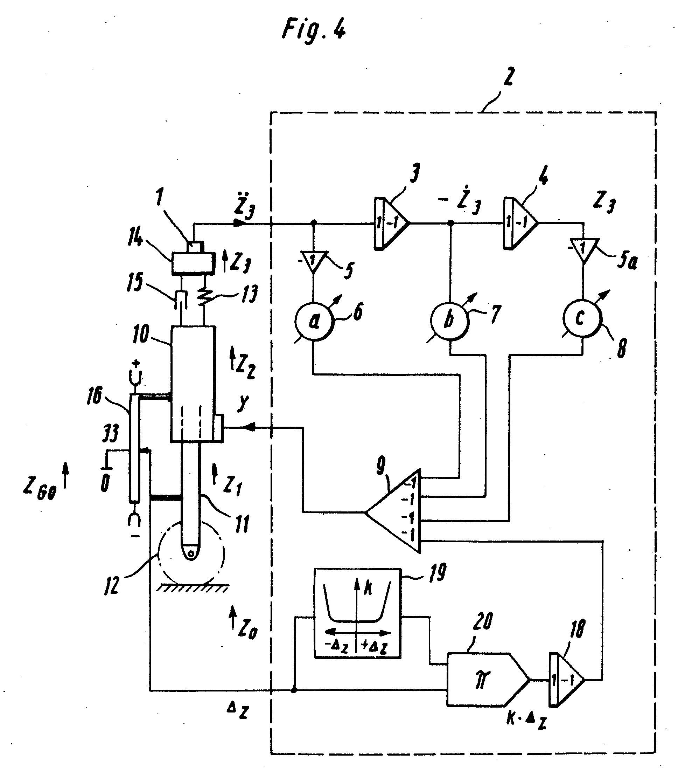

Fig. 4 zeigt eine weitere Beispielsausführung der Erfindung. Diese Einrichtung besteht im wesentlichen aus den aus Fig. 2 bekannten und entsprechend bezeichneten Elementen und weist weiterhin einen k-Funktionsgeber 19 und einen Multiplizierer 20 auf, die entsprechend Fig. 4 angeordnet sind. Hierdurch ist eine Einrichtung geschaffen, wodurch der Wert k in der Nähe der Endlagen erhöht wird, woraus eine schnellere Rückführung des beweglichen Teils 11 aus den Endlagen resultiert. Eine dabei einzuhaltende Stabilitätsbedingung folgt aus Gleichung (12), nämlich:

$$\frac{a \cdot k}{T} - \left(1 + \frac{b}{T}\right) \cdot c < 0. \qquad (12a)$$

In bestimmten Fällen kann es notwendig sein, die Nullstellung des beweglichen Teils 11 an eine beliebige Stelle, z. B. in die untere Endlage zu verschieben, was durch Anordnung einer variablen Grundstellung erreicht wird. Bezeichnet man die neue Grundstellung mit $Z_G$, so ergibt sich folgende Differentialgleichung für den Übergang in die neue Grundstellung:

$$-T\ddot{z}_3 = a\ddot{Z}_3 + b\dot{Z}_3 + cZ_3 + k \int (Z_3 - Z_6)\, dt \qquad (13)$$

$$Z_1 = 0. \qquad (14)$$

Der Frequenzgang wird entsprechend

$$\frac{Z_3}{Z_G} = F_{3G} = \frac{1}{1 + \dfrac{c}{k} \cdot p + \dfrac{b+T}{k} \cdot p^2 + \dfrac{a}{k} \cdot p^3} \qquad (15)$$

Mit der daraus folgenden Stabilitätsbedingung:

$$a - \frac{(b+T) \cdot c}{k} < 0. \qquad (15a)$$

Ausgehend von möglichst optimalen Betriebseinstellungen a, b, c, k, kann hierbei eine Vergrößerung von k ebenfalls zu starker (begrenzungseingeschränkter) Entdämpfung bzw. zur Instabilität der Einrichtung führen. Demgemäß ist zur Verhinderung dieser Möglichkeiten vorgesehen, daß bei Vergrößerung von k der Aufschaltfaktor a entsprechend Gleichung (12) mittels eines Regelkreises verkleinert wird.

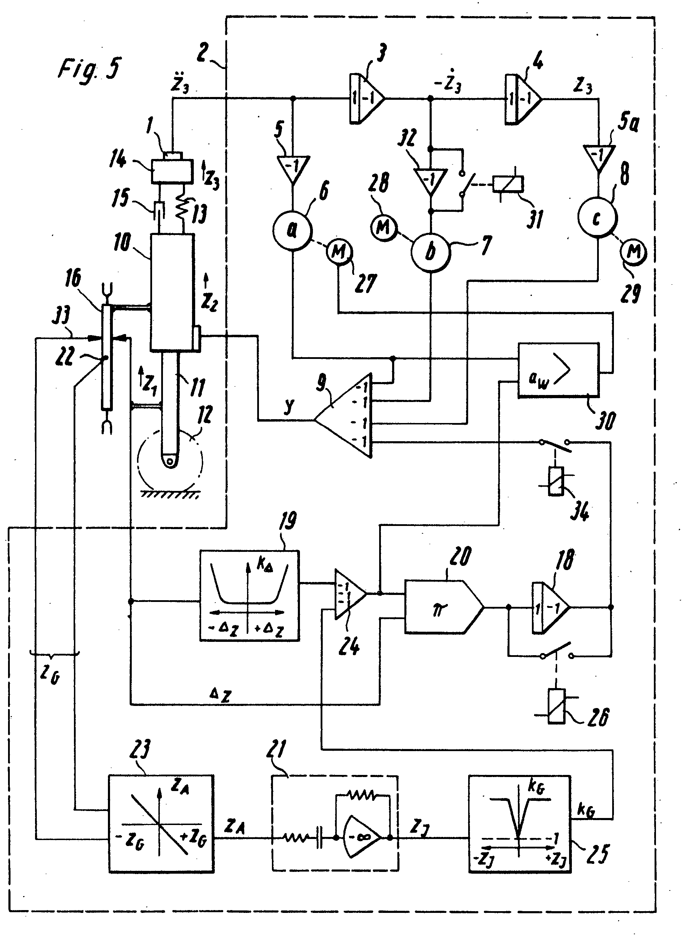

Figur 5 zeigt eine entsprechend erweiterte Ausgestaltung der Erfindung. Diese Einrichtung besteht im wesentlichen aus den aus Fig. 4 bekannten Elementen und weist weiterhin einen Differenzierer 21, einen Abgriff 22, einen Verstärker 23, einen Summierer 24, einen weiteren Funktionsgeber 25, drei Relais 26, 31, 34, Stellmotoren 27, 28, 29, einen Regler 30, einen weiteren Umkehrverstärker 32 sowie den nunmehr einstellbaren Schleifer 33 auf.

Diese Elemente sind entsprechend Fig. 5 angeordnet. Hier kann die Grundstellung des verschiebbaren Teils 11 durch entsprechende Einstellung des Schleifers 33 am Weggeber 16 vorgegeben werden. An dem festen Abgriff 22 wird das unveränderliche 0-Potential abgenommen. Die Differenz $Z_G$ beider Signale wird dem Verstärker 23 zugeführt. Der Differenzierer 21 bildet bei sprunghaften Einstellungsänderungen am Weggeber 16 aus dem Ausgangssignal $Z_A$ ein zeitabhängiges Signal $Z_J$, welches an den Funktionsgeber 25 weitergeleitet wird. Dieser liefert kurzzeitig einen großen konstanten Ausgangswert $k_G$, welcher im Summierer 24 mit dem k-Wert des Funktionsgebers 19 gemischt wird. Der resultierende k-Wert wird mit der Abweichung $\Delta z$, wie im Zusammenhang mit Fig. 4 beschrieben, weiterverarbeitet. Die Wirksamkeitsdauer der Elemente 21 und 25 ist durch geeignete Dimensionierung wählbar und mit den Kenngrößen der Anordnung abzustimmen. Die Potentiometer 6, 7 und 8 sind jeweils durch die Stellmotoren 27, 28 und 29 einstellbar ausgeführt. Insbesondere der Motor 27 wird bei großen resultierenden k-Werten (gemessen hinter dem Summierer 24) über den Regler 30 derart eingestellt, daß eine erforderliche Reduzierung von a mindestens dynamische Stabilität nach den Gleichungen (12) und (15a) sicherstellt.

Die Größe $a_w$ im Regler 30, als Sollwert für a, wird aus dem resultierenden k-Wert gebildet. Eine kurzzeitige »Versteifung« der Strebe für höhere Frequenzen $\omega$ kann bei Einstellungsänderungen bzw. in den Endlagen hingenommen werden. In erster Näherung kann dieser Einfluß aus Fig. 3 entnommen werden. Die Anpassungsfähigkeit der erfindungsgemäßen Einrichtung infolge der automatisch einstellbaren Aufschaltgrößen a, b, c und k soll an folgender Aufgabenstellung gezeigt werden.

Bei einem landenden Flugzeug oder bei einem abgeworfenen Fahrzeug soll die vertikale Bremsverzögerung möglichst konstant sein, und es soll der gesamte Strebenhub ausgenutzt werden. Wir definieren hierzu folgende Größen:

$$V_{oz} = \text{Sinkgeschwindigkeit (des Flugzeuges)} \tag{16}$$
$$\beta = \text{konstante vertikale Bremsverzögerung} \tag{17}$$
$$S_z = \text{maximaler Strebenhub;} \tag{18}$$

Aus Gleichung (19) ergibt sich die maximal mögliche Verzögerung:

$$\beta_{max} = \frac{V_{oz}^2}{2 \cdot S_z} . \tag{19}$$

Zum Ausfahren der Strebe auf maximalen Hub (noch ohne Bodenberührung) werden a, b, c = 0 eingestellt, sodaß gilt:

$$-T\dot{Z}_3 = k_G (Z_3 - Z_G) => \frac{Z_3}{Z_G} = \frac{1}{1 + \dfrac{T}{k_G \cdot p}} \tag{20}$$

$$Z_G = Z_{Gmax} \simeq S_z \tag{21}$$

Hierfür wird der Integrator 18 über das Relais 26 kurzgeschlossen.
Mit den Gleichungen (1) und (2) sowie (16) und (17) folgt weiter:

$$(1)\ (16)\ (17) = 22\,y \simeq T(\dot{Z}_1 - \dot{Z}_3) = T(V_{oz} - \beta \cdot t)$$

$$(2)\ (17) \qquad = (23)\,y \simeq a\ddot{Z}_3 + b\dot{Z}_3 = a\beta + b\beta \cdot t,$$

woraus sich nun für die Aufschaltgrößen ergibt:

$$a = \frac{T \cdot V_{oz}}{\beta} \tag{24}$$

$$b = -T \tag{25}$$

$$c, k = 0. \tag{26}$$

Zur Erfüllung der Gleichung (25) wird der Umkehrverstärker 32 über das Relais 31 eingeschaltet. Zur Erfüllung der Gleichung (20) wird der Ausgang des Integrators 18 durch das Relais 34 unterbrochen. Für das Ausrollen oder Fahren am Boden werden bei abgeschalteten Relais 26, 31 und 34 günstige Potentiometereinstellung a, b, c über die entsprechenden Stellmotoren vorgenommen. Durch die vorbeschriebene Wirkungsweise ist eine wesentliche Reduzierung des Landestoßes gegenüber bisherigen Fahrwerksdämpfern erreichbar. Die bei Flugzeugen zu verwendenden Stellstreben sind zweckmäßigerweise als Hydraulikzylinder auszuführen.

Der Erfindungsgedanke ist nicht auf die dargestellte Beispielsausführung beschränkt; vielmehr bezieht er sich auf alle äquivalenten Lösungen im Rahmen des Hauptanspruches, sofern diese die angegebene Gleichung (12) einschließlich möglicher Sonderfälle in Verbindung mit mindestens einer Stellstrebe und mindestens einem an diese angekoppelten Beschleunigungsmesser erfüllen. So sind anstelle der hier verwendeten Analogtechnik auch Lösungen auf Basis der Digitaltechnik denkbar. Die Angabe derartiger denkbarer Ausgestaltungen bzw. Ergänzungen würde jedoch über den Rahmen dieser Darstellung hinausgehen.

## Patentansprüche

1. Einrichtung zur Stoß- und Schwingungsdämpfung für Fahrzeuge, die zwischen den Rädern, den Schwimmern oder dgl. und der Masse des Fahrzeuges angeordnet ist und im wesentlichen aus mindestens einer Stellstrebe (10) besteht, die auf eine nach Größe und Richtung variable Eingangsgröße (y) mit einer dieser Größe proportionalen Relativgeschwindigkeit der Anschlußpunkte zueinander reagiert, wobei die Eingangsgröße (y) von mindestens einem an die Fahrzeugmasse angekoppelten Beschleunigungsmesser (1) über ein frequenzabhängiges aktives Netzwerk (2) derart geliefert wird, daß der (den) Stellstrebe(n) ein weitgehend wählbares frequenzabhängiges Feder Dämpfungsverhalten aufgezwungen wird, wobei ein dem Weg des beweglichen Teils (11) der Stellstrebe (10) entsprechendes elektrisches Signal in das Netzwerk (2) derart über z. B. einen Weggeber (16), ein Potentiometer (17) und einen Integrator (18) eingegeben wird, daß eine Rückführung des beweglichen Teils (11) in die Mittellage über eine relativ große Zeitkonstante erfolgt, dadurch gekennzeichnet, daß damit eine Grundgleichung

$$F_{31} = \frac{1 + \dfrac{k}{T} \cdot \dfrac{1}{p^2}}{\dfrac{a}{T} \cdot p + \left(1 + \dfrac{b}{T}\right) + \dfrac{c}{T} \cdot \dfrac{1}{p} + \dfrac{k}{T} \cdot \dfrac{1}{p^2}}$$

erfüllt wird, wobei $F_{31}$ das frequenzabhängige Verhältnis charakteristischer Auslenkung $Z_3/Z_1$ bei harmonischen Anregungen mit dem Operator p darstellt und die Größen a, b, c, k von einer Zeitkonstante T abhängige frei wählbare Koeffizienten bedeuten.

2. Einrichtung nach Anspruch 1, dadurch gekennzeichnet, daß die Zeitkonstante (T) über einen Funktionsgeber (19) und einen Multiplizierer (20) derart bestimmbar ist, daß die Zeitkonstante für die Rückführung in der Nähe der Endlagen des beweglichen Teils (11) einen kleinerern Wert als in der Mittellage aufweist.

3. Einrichtung nach den Ansprüchen 1 und 2, dadurch gekennzeichnet, daß zur Gewährleistung eines stabilen Verhaltens der Einrichtung bei einer stabilitätsgefährdenden Vergrößerung eines Koeffizienten (k) das Ausgangssignal eines Verstärkers (24) einem Regelverstärker (30) zugeführt wird, welcher eine Führungsgröße (a$_w$) bildet, die über ein entsprechendes Ausgangssignal des Regelverstärkers (30) und über einen Stellmotor (27) zu einer Einstellung eines Potentiometers (6) führt, wodurch auch die Grundgleichung erfüllt ist.

4. Einrichtung nach Anspruch 3, dadurch gekennzeichnet, daß die Potentiometer (6, 7, 8) innerhalb des Netzwerkes (2) durch von außen ansteuerbare Stellmotore (27, 28, 29) einstellbar ausgeführt sind.

5. Einrichtung nach den Ansprüchen 1 bis 4, dadurch gekennzeichnet, daß die Stellstrebe(n) (10) mit passiven Feder-Dämpfern (13, 15) bekannter Art in Reihen- oder Parallelschaltung kombiniert ist (sind).

6. Einrichtung nach den Ansprüchen 1 bis 5, dadurch gekennzeichnet, daß zwischen einem festen Null-Abgriff (22) und einem einstellbaren Schleifkontakt (33) des Weggebers (16) ein Signal (Z$_6$) abgegriffen und über einen Verstärker (23), einen Differenzierer (21) und einen Funktionsgeber (25) auf einen Summierer (24) derart gegeben wird, daß bei Verschiebung des Kontaktes (33) an eine beliebige Stelle ein mit dem beweglichen Teil (11) fest verbundener Schleifkontakt (35) infolge der Eingangsgröße (y) an die gleiche Stelle gefahren wird, wodurch sich eine neue Grundstellung des Teils (11) ergibt.

7. Einrichtung nach den Ansprüchen 1 bis 6, dadurch gekennzeichnet, daß das aktive Netzwerk (2) durch eine Analog-Elektronik oder durch eine Digital-Elektronik oder durch eine Hybrid-Elektronik verwirklicht ist.

## Claims

1. A device for shock and vibration absorption for vehicles which is arranged between the vehicle's wheels, floats or the like and the mass of the vehicle and comprises at least one adjusting strut (10) which reacts to an input variable (y), which is variable in magnitude and direction and proportional to the relative speed of reaction of its connection points to one another, in which respect the input variable (y) is supplied by at least one accelerometer, wich is coupled up to the vehicle mass, by way of a frequency-dependant active network (2) in such a way that a largely selectable frequency-dependant spring-damping behaviour is forced upon the adjusting strut or struts, in which respect an electrical signal corresponding to the path of the movable part (11) of the adjusting strut (10) is entered into the network (2) by way of, for example, a displacement pick-up (16), a potentiometer (17) and an integrator (18) so that a return of the movable part (11) into the central position is effected over a relatively large time constant, characterised in that thus a basic equation

$$F_{31} = \frac{1 + \dfrac{k}{T} \cdot \dfrac{1}{p^2}}{\dfrac{a}{T} \cdot p + \left(1 + \dfrac{b}{T}\right) + \dfrac{c}{T} \cdot \dfrac{1}{p} + \dfrac{k}{T} \cdot \dfrac{1}{p^2}}$$

is fulfilled, in which respect $F_{31}$ represents the frequency-dependant ratio of characteristic deflections $Z_3/Z_1$ upon harmonic excitations with the operator p and the variables a, b, c, k, denote freely selectable coefficients which are dependant upon a time constant T.

2. A device according to claim 1, characterised in that the time constant (T) is determined by a function generator (19) and a multiplier (20) in such a way that the time constant for the return of the movable part, when it is at or near its end positions, has a smaller value than in the central position.

3. A device according to claim 1 and 2, characterised in that to ensure stable behaviour of the device upon enlargement of a coifficient (k) thereby endangering the device's stability, the output signal of an amplifier (24) is fed to a control amplifier (30), which forms a command variable ($a_W$), which by way of an appropriate output signal of the control amplifier (30) and by way of an adjusting motor (27) leads to an ajustment of a potentiometer (6), which ensures the basic equation is fulfilled.

4. A device according to claim 3, characterised in that the potentiometers (6, 7, 8) are designed so as to be adjustable inside the network (2) by adjusting motors (27, 28, 29) which are controllable from the outside.

5. A device according to claims 1 to 4, characterised in that the adjusting strut or struts (10) is or are connected in series or parallel with passive spring dampers (13, 15) of known kind.

6. A device according to claims 1 to 5, characterised in that between a fixed zero tap (22) and an adjustable sliding contact (33) of the displacement pick-up (16) a signal ($Z_6$) is tapped off and is passed on, by way of an amplifier (23), a differentiator (21) and a function generator (25), to a summator (24) in such a way that upon shifting of the contact (33) onto any desired position a sliding contact (35), connected fixedly to the movable part (11), is run as a result of the input variable (y) onto the same position, whereby a new base position of the part (11) emerges.

7. A device according to claims 1 to 6, characterised in that the active network (2) is realised by analogue electronics or by digital electronics or by hybrid electronics.

## Revendications

1. Dispositif pour amortissement de secousses et oscillations, pour véhicules, agencé entre la masse du véhicule et les roues, les flotteurs ou analogues, et constitué, pour l'essentiel, par au moins une membrure variable (10) qui réagit à une grandeur d'entrée (y), variable en grandeur et direction, par une vitesse mutuelle relative des points d'attache qui est proportionnelle à cette grandeur, la grandeur d'entrée (y) provenant d'au moins un accéléromètre (1) couplé à la masse du véhicule et fournissant cette grandeur d'entrée par l'intermédiaire d'un réseau actif (2) dépendant de la fréquence, de manière qu'un comportement de ressort avec amortissement, dépendant de la fréquence, amplement sélectionnable, soit imposé à la (aux) membrure(s), un signal électrique correspondant à la course de la partie mobile (11) de la membrure variable (10) étant fourni au réseau (2), cela par exemple par l'intermédiaire d'un capteur de déplacement (16), d'un potentiomètre (17) et d'un intégrateur (18), de manière telle qu'une rétroaction de la partie mobile (11) à la position moyenne ait lieu sur une constante de temps relativement grande, caractérisé par le fait qu'est ainsi satisfaite une égalité de base

$$F_{31} = \frac{1 + \dfrac{k}{T} \cdot \dfrac{1}{p^2}}{\dfrac{a}{T} \cdot p + \left(1 + \dfrac{b}{T}\right) + \dfrac{c}{T} \cdot \dfrac{1}{p} + \dfrac{k}{T} \cdot \dfrac{1}{p^2}}$$

$F_{31}$ étant le rapport, dépendant de la fréquence, des déviations caractéristiques $Z_3/Z_1$ lors d'excitations harmoniques avec l'opérateur p, et les grandeurs a, b, c, k désignant des coefficients qui peuvent être choisis librement et dépendent d'une constante de temps T.

2. Dispositif selon revendication 1, caractérisé par le fait que la constante de temps (T) peut être déterminée par un générateur de fonction (19) et un multiplicateur (20), de manière que la constante de temps pour la rétroaction au voisinage des positions extrêmes de la partie mobile (11) présente une valeur plus petite que dans la position moyenne.

3. Dispositif selon les revendications 1 et 2, caractérisé par le fait que, pour assurer un comportement stable du dispositif dans le cas où un coefficient (k) présente un accroissement menaçant la stabilité, le signal de sortie d'un amplificateur (24) est transmis à un amplificateur de réglage (30) qui forme une grandeur de référence ($a_W$), laquelle conduit à un réglage d'un potentiomètre (6), cela par un signal de sortie correspondant de l'amplificateur de réglage (30) et par un servomoteur (27), ce qui a pour effet que l'égalité de base est aussi satisfaite.

4. Dispositif selon revendication 3, caractérisé par le fait que les potentiomètres (6, 7, 8) à l'intérieur du réseau (2) sont réalisés réglables par des servomoteurs (27, 28, 29) pouvant être commandés de l'extérieur.

5. Dispositif selon les revendications 1 à 4, caractérisé par le fait que la ou les membrure(s) variable(s) (10) est (sont) combinée(s) à des amortisseurs-ressorts passifs (13, 15) d'un type connu, en montage série ou parallèle.

6. Dispositif selon les revendications 1 à 5, caractérisé par le fait qu'un signal ($Z_6$) est prélevé entre une prise de zéro fixe (22) et un contact glissant réglable (33) du capteur de déplacement (16) et est transmis, via un amplificateur (23), un soustracteur et un générateur de fonction (25), à un additionneur (24), de manière qu'en cas de déplacement du contacte (33) en un endroit quelconque un contact glissant (35) solidarisé à la partie mobile (11) soit amené au même endroit sous l'effet de la grandeur d'entrée (y), d'où il résulte une nouvelle position de base de la partie (11).

7. Dispositif selon les revendications 1 à 6, caractérisé par le fait que le réseau actif (2) est réalisé par une électronique analogique ou par une électronique numérique ou par une électronique hybride.

# Fig. 1

## Fig. 2

Fig. 3

## Fig. 4

Fig. 5